# EUROPEAN PATENT APPLICATION

(11) **EP 4 539 233 A1**
(43) Date of publication of application: **16.04.2025**
(21) Application number: 23872738.2
(22) Date of filing: 17.07.2023
(51) Int. Cl.: H01M 50/367, H01M 50/30, H01M 50/204, H01M 50/242, H01M 50/249

(54) **BATTERY PACK AND VEHICLE INCLUDING SAME**

(30) Priority: 30.09.2022 KR 20220124989
(71) Applicant: LG Energy Solution, Ltd., Seoul 07335 (KR)
(72) Inventor: SEO, Sung-Won, Daejeon 34122 (KR); LEE, In-Je, Daejeon 34122 (KR)
(74) Representative: Plasseraud IP
(86) International application number: PCT/KR2023/010221
(87) International publication number: WO 2024/071613

(57) **Abstract**

Provided are a battery pack configured to improve energy density and ensure structural stability even when a thermal event occurs and a vehicle including the battery pack. A battery pack according to an aspect of the present disclosure includes a cell assembly, a cell case in which the cell assembly is accommodated, the cell case including an open portion formed in at least one side, and a pack housing to which the cell case is coupled, the pack housing including a venting path facing the open portion.

## Description

The present application claims priority to Korean Patent Application No. 10-2022-0124989 filed on September 30, 2022 in the Republic of Korea, the disclosures of which are incorporated herein by reference.

### TECHNICAL FIELD

The present disclosure relates to a battery pack and a vehicle including the same, and more particularly, to a battery pack configured to improve energy density and ensure structural stability even when a thermal event occurs, and a vehicle including the battery pack.

### BACKGROUND ART

As the demand for portable electronic products such as laptops, video cameras, and mobile phones has recently rapidly increased and the development of electric vehicles, energy storage batteries, robots, satellites, etc. has begun in earnest, research on high-performance secondary batteries capable of repeated charge/discharge has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

A lithium secondary battery mainly uses a lithium-based oxide and a carbon material as a positive electrode active material and a negative electrode active material, respectively. Also, a lithium secondary battery includes an electrode assembly in which a positive electrode plate and a negative electrode plate coated with a positive electrode active material and a negative electrode active material are located with a separator therebetween, and a casing in which the electrode assembly is sealed and accommodated along with an electrolyte.

According to a shape of a battery case, lithium secondary batteries may be classified into can-type secondary batteries in which an electrode assembly is received in a metal can, and pouch-type secondary batteries in which an electrode assembly is received in a pouch of an aluminum laminate sheet. Can-type secondary batteries may be classified into cylindrical batteries and prismatic batteries according to a shape of a metal can.

A pouch of a pouch-type secondary battery may be largely divided into a lower sheet and an upper sheet covering the lower sheet. In this case, an electrode assembly formed by stacking and winding a positive electrode, a negative electrode, and a separator is accommodated in the pouch. After the electrode assembly is accommodated, edges of the upper sheet and the lower sheet are sealed to each other through thermal fusion or the like. Also, an electrode tab drawn out from each electrode may be coupled to an electrode lead, and an insulating film may be added to a portion of the electrode lead contacting a sealing portion.

As such, a pouch-type secondary battery may be flexibly formed in various shapes. Also, a pouch-type secondary battery has the advantage of implementing a secondary battery of the same capacity with a smaller volume and mass.

In order for a lithium secondary battery to provide high voltage and high current, a plurality of battery cells are overlapped or stacked by themselves or overlapped or stacked while mounted on a cartridge to form a dense structure, and then, are used as a battery module or a battery pack in which the battery cells are electrically connected.

However, such a conventional battery pack may be disadvantageous in terms of energy density. In particular, in a process of accommodating and modularizing a plurality of battery cells in a module case, the volume of a battery pack may be unnecessarily increased or a space occupied by the battery cells may be reduced due to various components such as the module case or a stacking frame. Furthermore, in order to secure an assembly tolerance for the components such as the module case or the stacking frame as well as a space occupied by the components, a receiving space for the battery cells may be reduced. Accordingly, there may be limitations in increasing the energy density of the conventional battery pack.

Also, the conventional battery pack may be disadvantageous in terms of assemblability. In particular, in order to manufacture a battery pack, because a plurality of battery cells are first modularized to form a battery module and then the battery module is accommodated in a pack case, a process of manufacturing a battery pack becomes complicated. Moreover, a process and structure of forming a cell stack by using a stacking frame, a bolt, a plate, etc. may be very complicated.

Also, the conventional battery pack has a problem in that because a module case is accommodated in a pack case and battery cells are accommodated in the module case, it is difficult to ensure excellent cooling performance. In particular, when heat of the battery cells accommodated in the module case is discharged to the outside of the pack case through the module case, cooling efficiency may be reduced and a cooling structure may be complicated.

Also, safety is one of the most important issues in a battery pack. In particular, when a thermal event occurs in any one of a plurality of battery cells included in a battery pack, it is necessary to suppress propagation of the thermal event to other battery cells.

When the propagation of the thermal event between battery cells is not appropriately suppressed, this may cause a thermal event of other battery cells included in the battery pack, thereby causing a bigger problem such as ignition or explosion of the battery pack. Furthermore, the ignition or explosion of the battery pack may cause great damage to surrounding people or property. Accordingly, in such a battery pack, a configuration capable of appropriately controlling a thermal event is required.

### DISCLOSURE

### Technical Problem

The present disclosure is designed to solve the problems of the related art, and therefore the present disclosure is directed to providing a battery pack configured to improve energy density and ensure structural stability even when a thermal event occurs, and a vehicle including the battery pack.

However, technical objectives to be achieved by the present disclosure are not limited thereto, and other unmentioned technical objectives will be apparent to one of ordinary skill in the art from the description of the present disclosure.

### Technical Solution

In one aspect of the present disclosure, there is provided a battery pack including a cell assembly, a cell case in which the cell assembly is accommodated, the cell case including an open portion formed in at least one side thereof, and a pack housing to which the cell case is coupled, the pack housing including a venting path facing the open portion.

In an embodiment, the cell case may include a coupling portion configured to be coupled to the pack housing, wherein the coupling portion is configured to be in surface contact with the pack housing.

In an embodiment, the coupling portion may be configured to be coupled to a floor frame or an upper cover of the pack housing.

In an embodiment, the pack housing may include a plurality of frames that are coupled to each other, wherein at least one of the plurality of frames include a venting path facing the open portion.

In an embodiment, the pack housing may include a communication hole communicating with the venting path, wherein the communication hole is formed at a position corresponding to the open portion of the cell case.

In an embodiment, the open portion may be configured to be in close contact with a portion of the pack housing where the communication hole is formed.

In an embodiment, the cell case may further include an insertion portion formed in the open portion and configured to be inserted into the venting path through the communication hole.

In an embodiment, the insertion portion may be bent from the open portion toward inside of the venting path.

In an embodiment, the open portion may have an area greater than an area of the communication hole.

In an embodiment, a pair of open portions may be formed on both sides of the cell case, wherein the communication holes are formed at positions corresponding to the pair of open portions.

In an embodiment, the pack housing may further include a guide portion bent from the communication hole toward inside of the venting path.

In an embodiment, the cell assembly may be accommodated in the cell case to be spaced apart from the open portion.

In an embodiment, the cell case may further include a flow preventing portion bent from the open portion toward the cell assembly, wherein an end of the flow preventing portion is bent toward the venting path.

In an embodiment, a plurality of cell assemblies may be provided, and a plurality of cell cases may be provided to correspond to the plurality of cell assemblies, wherein the battery pack further includes a compression pad located between the plurality of cell cases, wherein each cell case further includes an extension portion extending from the open portion in a stacking direction of the plurality of cell cases and located between the pack housing and the compression pad.

According to another aspect of the present disclosure, there is provided a vehicle including at least one battery pack according to an aspect of the present disclosure as described above.

### Advantageous Effects

According to an embodiment of the present disclosure, thermal runaway or flame propagation between battery cells in one cell assembly may be prevented. Also, because the flow of venting gas and/or flame is guided in a certain direction, thermal runaway propagation and simultaneous ignition between a plurality of cell assemblies may be prevented.

Also, according to an embodiment of the present disclosure, at least one battery cell may be directly seated and accommodated in a pack housing, without a separate module case. That is, because a part of a battery cell may be surrounded by a cell case and seated on a pack housing without a module case, a seating state of a cell assembly may be stably maintained even without a separate reinforcing member such as a separate pack crossbeam for maintaining the seating state of the cell assembly.

Also, according to an embodiment of the present disclosure, because a module case or a reinforcing member such as a pack crossbeam is not required, a space occupied by the module case or the reinforcing member in a pack housing or a space for securing a tolerance may not be required. Accordingly, because an additional space in the pack housing for mounting a cell assembly may be secured, the energy density of a battery pack may be further improved.

Also, according to an embodiment of the present disclosure, because a module case or a reinforcing member such as a pack crossbeam is not required, the volume or weight of a battery pack may be reduced and a manufacturing process may be simplified.

In addition, various other additional effects may be achieved by various embodiments of the present disclosure. The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view illustrating a battery pack according to an embodiment of the present disclosure.
FIG. 2 is a view for describing a detailed structure of the battery pack of FIG. 1.
FIG. 3 is a cross-sectional view taken along line A-A' of the battery pack of FIG. 1.
FIG. 4 s an exploded perspective view illustrating the battery pack of FIG. 2.
FIG. 5 is a view illustrating a cell assembly provided in the battery pack of FIG. 1.
FIG. 6 is a view illustrating a cell case covering the cell assembly of FIG. 5.
FIG. 7 is a view illustrating a pack housing provided in the battery pack of FIG. 1.
FIG. 8 is a view illustrating a state where a cell case is coupled to the pack housing of FIG. 7.
FIG. 9 is a view illustrating a cell case according to another embodiment of the present disclosure.
FIG. 10 is a view illustrating a state where venting gas or flame is discharged during thermal runaway of a battery cell in a battery pack according to an embodiment of the present disclosure.
FIG. 11 is a view illustrating a battery pack according to a second embodiment of the present disclosure.
FIG. 12 is a view illustrating a battery pack according to a third embodiment of the present disclosure.
FIG. 13 is a view illustrating a battery pack according to a fourth embodiment of the present disclosure.
FIG. 14 is a view illustrating a battery pack according to a fifth embodiment of the present disclosure.
FIG. 15 is a view illustrating a battery pack according to a sixth embodiment of the present disclosure.
FIGS. 16 and 17 are views illustrating a battery pack according to a seventh embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

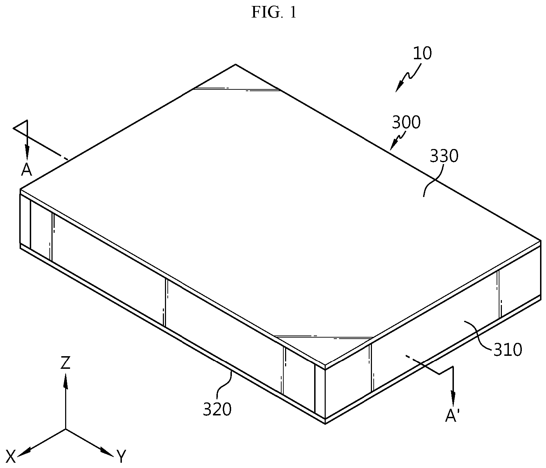

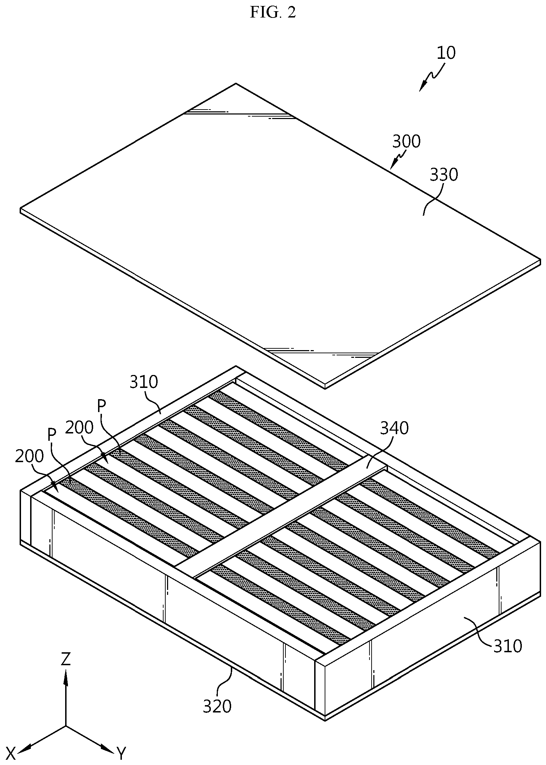

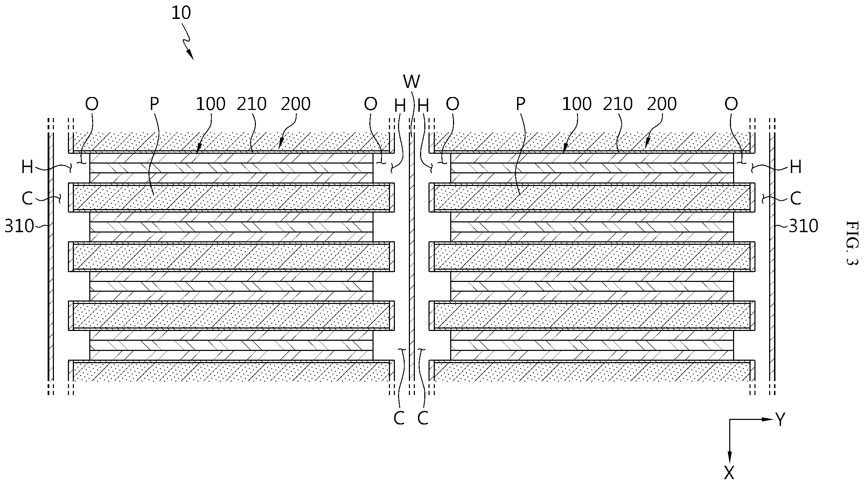

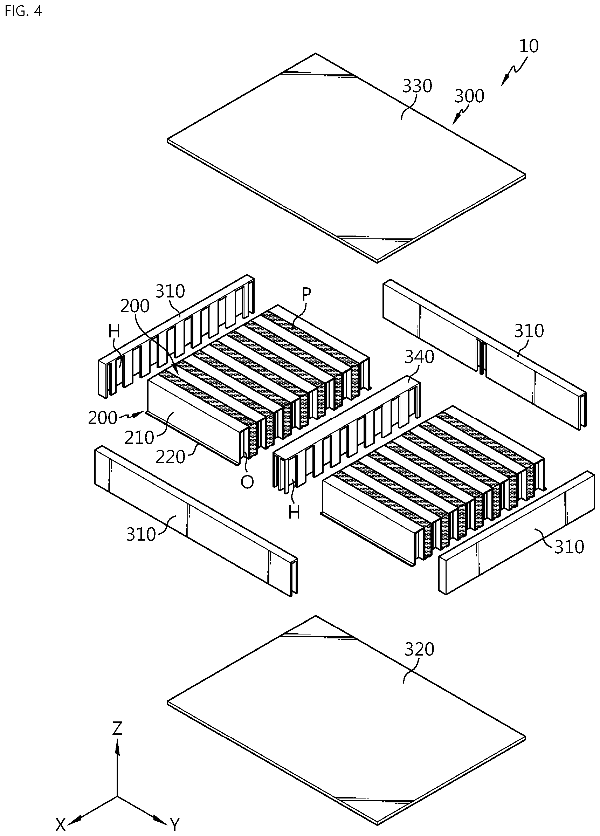

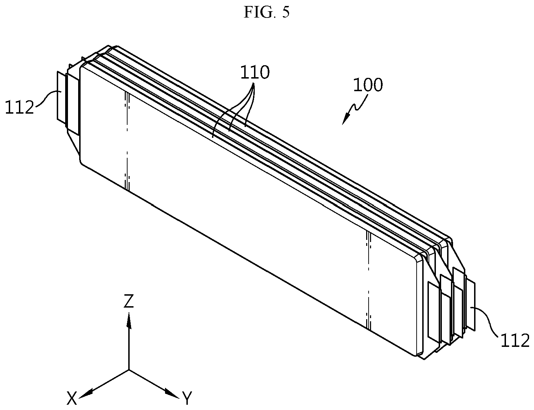

FIG. 1 is a view illustrating a battery pack 10 according to an embodiment of the present disclosure. FIG. 2 is a view for describing a detailed structure of the battery pack 10 of FIG. 1. FIG. 3 is a cross-sectional view taken along line A-A' of the battery pack of FIG. 1 (in detail, FIG. 3 is a cross-sectional view taken along line A-A' of the battery pack 10 of FIG. 1 in an XY plane). FIG. 4 is an exploded perspective view illustrating the battery pack 10 of FIG. 2. FIG. 5 is a view illustrating a cell assembly 100 provided in the battery pack 10 of FIG. 1. **In** an embodiment of the present disclosure, an electrode lead 112 described below is not shown in drawings other than FIG. 5.

In an embodiment of the present disclosure, in the drawings, an X-axis direction may refer to a front-back direction of a battery pack 10 described below, a Y-axis direction may refer to a left-right direction of the battery pack 10 perpendicular to the X-axis direction in a horizontal plane (XY plane), and a Z-axis direction may refer to an up-down direction perpendicular to both the X-axis direction and the Y-axis direction.

Referring to FIGS. 1 to 5, the battery pack 10 according to an embodiment of the present disclosure may include the cell assembly 100, a cell case 200, and a pack housing 300.

The cell assembly 100 may include at least one battery cell 110. Each battery cell may refer to a secondary battery. Each battery cell 110 may be provided as a pouch-type battery cell, a cylindrical battery cell, or a prismatic battery cell. For example, each battery cell 110 may be a pouch-type battery cell. Also, the electrode lead 112 may be provided on at least one of both sides of the battery cell 110.

The cell assembly 100 may be accommodated in the cell case 200. To this end, the cell case 200 may have an inner receiving space in which the cell assembly 100 is accommodated. The cell case 200 may include a material with high heat resistance and rigidity.

For example, the cell case 200 may be formed in a substantially 'n' shape. That is, due to this shape, the cell case 200 may surround portions of the battery cell 110 accommodated in the cell case 200 other than a lower side and both sides of the battery cell 110 where the electrode leads 112 are provided. Furthermore, the cell case 200 may be configured to cover both side surfaces and an upper edge of the cell assembly 100 in the front-back direction (X-axis direction).

In detail, the cell case 200 may include an open portion O formed in at least one side thereof. For example, the open portion O may be formed in at least one of both sides of the cell case 200 in the left-right direction (Y-axis direction). That is, the open portion O may be formed in a portion of the cell case 200 corresponding to a portion where the electrode lead 112 of the battery cell 110 is provided.

The cell case 200 in which the cell assembly 100 is accommodated may be accommodated in the pack housing 300. To this end, the pack housing 300 may have an inner receiving space in which the cell case 200 is accommodated. The pack housing 300 may include a material with high heat resistance and rigidity.

In detail, the cell case 200 may be coupled to the pack housing 300. Also, the pack housing 300 may include a venting path C facing the open portion O of the cell case 200.

In a general battery pack, an event such as thermal runaway may occur in a specific battery cell. In this case, high-temperature and high-pressure venting gas may be generated from the specific battery cell, and when the high-temperature and high-pressure venting gas meets oxygen, a flame may be generated inside or outside the battery pack.

The flame generated in one battery cell may be likely to be transferred to other battery cells adjacent to the one battery cell, and thus, a plurality of battery cells may be simultaneously ignited.

The battery pack 10 of the present disclosure may solve the above problem by providing the open portion O of the cell case 200 to face the venting path C of the pack housing 300. In this case, the venting path C may be configured to communicate with the open portion O and guide venting gas or flame to be discharged to the outside of the pack housing 300. That is, the venting path C may provide a flow space so that venting gas and/or flame discharged through the open portion O is discharged to the outside of the pack housing 300.

In detail, in the battery pack 10 of the present disclosure, a discharge direction of venting gas and/or flame may be guided through the open portion O that is an exposed portion of the cell case 200. That is, the cell case 200 may allow venting gas and/or flame discharged from the cell assembly 100 to be introduced into the venting path C of the pack housing 300 and guide the flow of the venting path and/or flame in a certain direction.

According to this embodiment of the present disclosure, thermal runaway or flame propagation between the battery cells 110 in one cell assembly 100 may be prevented. Also, because the flow of venting gas and/or flame is guided in a certain direction, thermal runaway propagation and simultaneous ignition between a plurality of cell assemblies 100 may be prevented.

Also, according to the embodiment of the present disclosure, at least one battery cell 110 may be directly seated and accommodated in the pack housing 300, without a separate module case. That is, because a part of the battery cell 110 may be surrounded by the cell case 200 and seated on the pack housing 300 without a module case, a seating state of the cell assembly 100 may be stably maintained even without a reinforcing member such as a separate pack crossbeam for maintaining the seating state of the cell assembly 100.

Also, according to the embodiment of the present disclosure, because a module case or a reinforcing member such as a pack crossbeam is not required, a space occupied by the module case or the reinforcing member in the pack housing 300 or a space for securing a tolerance may not be required. Accordingly, because an additional space in the pack housing 300 for mounting the cell assembly 100 may be secured, the energy density of the battery pack 10 may be further improved.

Also, according to the embodiment of the present disclosure, because a module case or a reinforcing member such as a pack crossbeam is not required, the volume or weight of the battery pack may be reduced and a manufacturing process may be simplified.

Moreover, the cell case 200 may include or be formed of a steel material, particularly, a stainless steel (SUS) material. According to the embodiment, because the cell case 200 is not easily melted even by a high-temperature flame or the like, flame propagation between the cell assemblies 100 may be prevented. Also, according to this embodiment, because a structure of the cell case 200 does not collapse and remains constant even when a flame or the like is generated, internal components of the battery pack 10 may be stably maintained.

The pack housing 300 may be integrally formed, or may be formed as an assembly of a plurality of members.

In an embodiment, referring to FIG. 4, the pack housing 300 may include a plurality of frames that are coupled to each other. That is, the pack housing 300 may include a plurality of frames that are coupled to each other to form an inner receiving space having a certain size.

Also, as shown in FIG. 3, at least some of the plurality of frames may include the venting path C facing the open portion O. Accordingly, according to a direction of the open portion O of the cell case 200 in the pack housing 300, all of the plurality of frames may include the venting path C or only some of the plurality of frames may include the venting path C.

In detail, the pack housing 300 may include side frames 310, a floor frame 320, an upper cover 330, and a reinforcing frame 340, as shown in FIG. 4.

The side frames 310 may constitute side surfaces of the pack housing 300. For example, the venting path C may be formed along the front-back direction of the pack housing 300, in the side frame 310 formed in the front-back direction (X-axis direction) of the pack housing 300 among the side frames 310. That is, the venting path C of the side frame 310 may face the open portion O of the cell case 200.

Also, although not shown, the side frame 310 may include an outlet. The outlet may be configured to communicate with the venting path C and discharge venting gas and/or flame to the outside of the pack housing 300.

The floor frame 320 may constitute the bottom of the pack housing 300, and may be coupled to a lower portion of the side frame 310.

In this case, a heat sink (not shown) may be provided on the floor frame 320. For example, a lower portion of the cell assembly 100 accommodated in the cell case 200 may be seated on the floor frame 320. Accordingly, heat generated from the cell assembly 100 may be discharged to the outside of the pack housing 300 through the heat sink provided on the floor frame 320.

That is, because the cell assembly 100 may be in direct surface contact with the pack housing 300 without a separate module case, heat emitted from the cell assembly 100 may be directly transferred to the pack housing 300, thereby further improving the cooling performance of the battery pack 10.

The upper cover 330 may be coupled to an upper portion of the side frame 310, and may cover the cell case 200 accommodated in the pack housing 300.

The reinforcing frame 340 may be a component for reinforcing the rigidity of the pack housing 300. In this case, the floor frame 320 may be located under the reinforcing frame 340. Also, both ends of the reinforcing frame 340 in the front-back direction (X-axis direction) may be coupled to the side frames 310 located along the left-right direction of the pack housing 300 among the side frames 310. When viewed in the left-right direction (Y-axis direction) of the pack housing 300, the reinforcing frame 340 may be provided at substantially the center of the pack housing 300.

Also, the venting path C may be formed in the reinforcing frame 340 along the front-back direction of the pack housing 300. That is, the venting path C of the reinforcing frame 340 may face the open portion O of the cell case 200.

According to this embodiment, because the venting paths C in a plurality of frames may be formed according to a direction of the open portion O of the cell case 200 to be accommodated in the pack housing 300, a manufacturing time and cost of the pack housing 300 may be reduced.

A detailed structure of the battery pack 10 of the present disclosure will now be described in more detail.

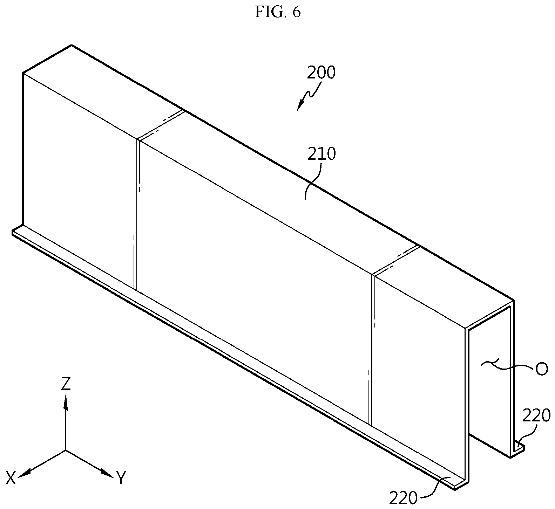

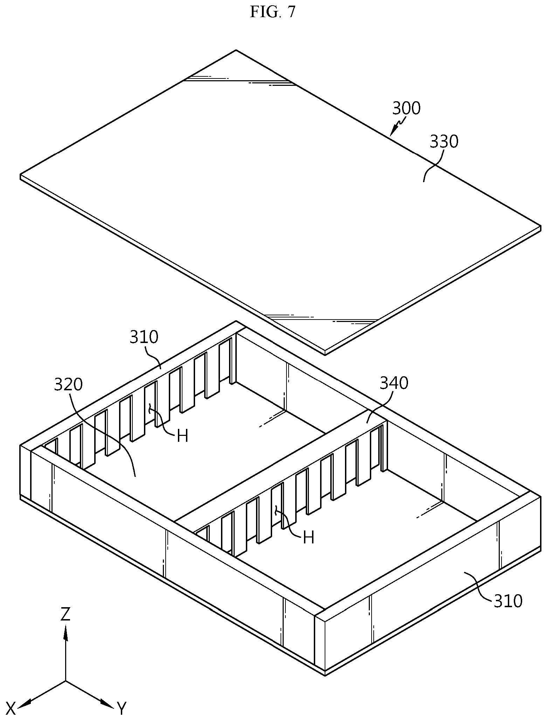

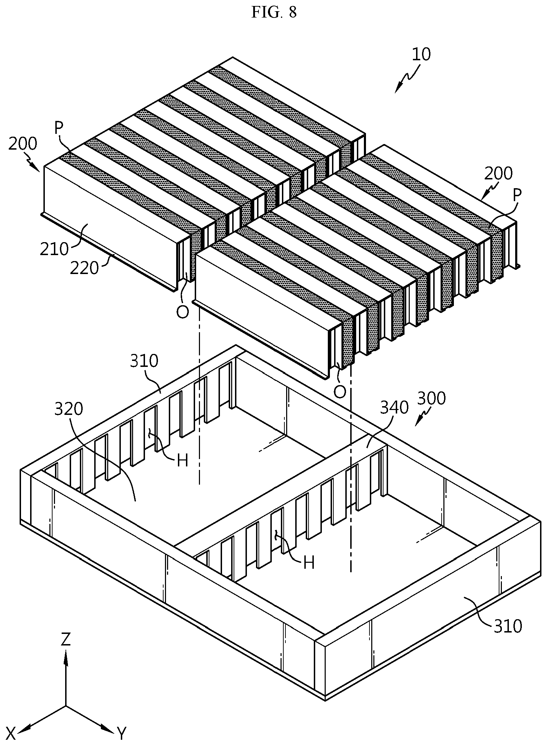

FIG. 6 is a view illustrating the cell case 200 covering the cell assembly 100 of FIG. 5. FIG. 7 is a view illustrating the pack housing 300 provided in the battery pack 10 of FIG. 1. FIG. 8 is a view illustrating a state where the cell case 200 is coupled to the pack housing 300 of FIG. 7.

Referring to FIGS. 3, 4, 6, and 8, the cell case 200 may include a case body 210 and a coupling portion 220.

The case body 210 may be configured to surround a part of the cell assembly 100, in an inner space of the pack housing 300. Furthermore, the case body 210 may be configured to cover both side surfaces and an upper edge portion of the cell assembly 100 in the front-back direction (X-axis direction). In particular, the case body 210 may be formed in a substantially 'n' shape. Also, the open portion O may be formed in at least one side of the case body 210.

The coupling portion 220 may be coupled to the pack housing 300. In detail, the coupling portion 220 may extend from a lower end of the case body 210 to both sides of the pack housing 300 in the front-back direction (X-axis direction).

The coupling portion 220 may be in surface contact with the pack housing 300. For example, the coupling portion 220 may be in surface contact with the floor frame 320 of the pack housing 300.

According to this embodiment, the cell case 200 and the cell assembly 100 accommodated in the cell case 200 may be more stably accommodated in the pack housing 300. Accordingly, the flow of venting gas and/or flame discharged from the cell assembly 100 may be more stably guided in one direction.

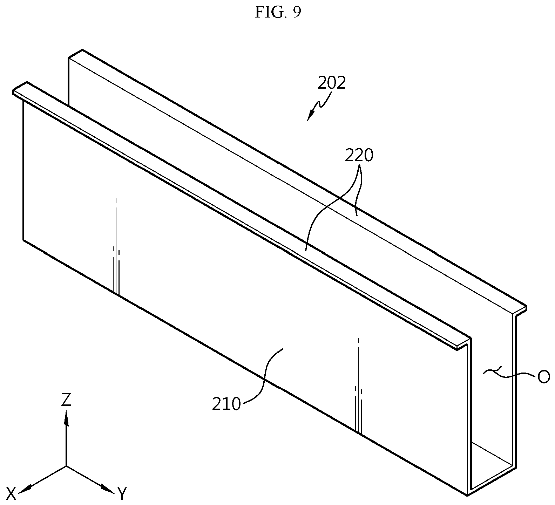

FIG. 9 is a view illustrating a cell case 202 according to another embodiment of the present disclosure.

Because the cell case 202 according to the present embodiment is similar to the cell case 200 according to the above embodiment, a repeated description of elements that are substantially the same as or similar to those in the above embodiment will be omitted and the following will focus on a difference from the above embodiment.

Referring to FIG. 9, the cell case 202 may be formed in a substantially 'U' shape. That is, due to this shape, the cell case 202 may be surround portions of the battery cell 110 accommodated in the cell case 202 other than an upper side and both sides of the battery cell 110 where the electrode leads 112 are provided. In particular, the cell case 202 may be configured to cover both side surfaces and a lower edge portion of the cell assembly 100 in the front-back direction (X-axis direction).

In detail, the cell case 202 may include the open portion O formed in at least one side thereof. For example, the open portion O may be formed in at least one of both sides of the cell case 202 in the left-right direction (Y-axis direction). That is, the open portion O may be formed in a portion of the cell case 202 corresponding to a portion where the electrode lead 112 of the battery cell 110 is provided.

Also, the coupling portion 220 of the cell case 202 may be coupled to the upper cover 330 of the pack housing 300.

In this case, a heat transfer material (not shown) may be provided under the upper cover 330. For example, an upper portion of the cell assembly 100 accommodated in the cell case 202 may be seated on the upper cover 330. Accordingly, heat generated from the cell assembly 100 may be discharged to the outside of the pack housing 300 through the heat transfer material provided on the upper cover 330.

According to this embodiment, because the cell case 202 may have a shape that allows the cell assembly 100 to be seated on the upper cover 330 in the pack housing 300, the cell case 202 may be formed in various shapes according to an installation environment of the battery pack 10.

Also, according to the embodiment, a lower portion of the cell case 202 may be stably seated on the floor frame 320 of the pack housing 300. Accordingly, a state in which the cell case 202 and the cell assembly 100 accommodated in the cell case 202 are stacked, seated, and assembled may be more stably maintained.

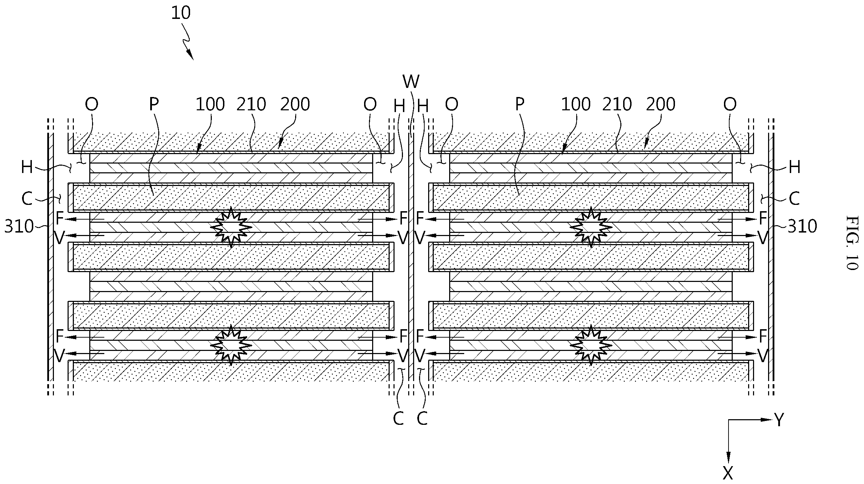

FIG. 10 is a view illustrating a state where venting gas or flame is discharged during thermal runaway of the battery cell 110 in the battery pack 10 according to an embodiment of the present disclosure. In this case, in FIG. 10, venting gas and flame described below are respectively denoted by 'V' and 'F'.

Referring to FIGS. 7, 8, and 10, the pack housing 300 may further include a communication hole H.

The communication hole H may communicate with the venting path C. Also, the communication hole H may be formed at a position corresponding to the open portion O of the cell case 200. In this case, at least one communication hole H may be formed along the front-back direction (X-axis direction) of the pack housing 300. For example, the communication hole H may be provided in the side frame 310 or the reinforcing frame 340.

For example, the open portions O of a plurality of cell cases 200 in which the cell assembly 100 is accommodated may respectively correspond to a plurality of communication holes H.

That is, because the open portion O of the cell case 200 faces the communication hole H, the flow of venting gas and/or flame discharged from the cell assembly 100 may be more rapidly introduced into the venting path C.

According to this embodiment, the flow of venting gas and/or flame may be more stably guided and venting gas and/or flame may be more rapidly discharged to the outside of the pack housing 300 through the open portions O of the plurality of cell cases 200.

In particular, the open portion O may be formed to be in close contact with a portion where the communication hole H is formed in the pack housing 300.

That is, the open portion O may be in close contact with a portion of the pack housing 300 where the communication hole H is formed, so as not to form a gap between the open portion O and the communication hole H in the left-right direction (Y-axis direction) of the pack housing 300.

Accordingly, venting gas and/or flame discharged from one cell assembly 100 may be prevented from traveling to other cell assemblies 100 accommodated in the adjacent cell case 200. Accordingly, simultaneous ignition between the plurality of cell assemblies 100 may be more reliably suppressed.

Referring to FIGS. 3, 4, 6, 8, and 10, a pair of open portions O of the cell case 200 may be formed on both sides of the cell case 200.

Also, the communication holes H of the pack housing 300 may be formed at positions corresponding to the pair of open portions O of the cell case 200.

For example, the pair of open portions O of the cell case 200 may be formed at positions corresponding to the communication holes H of the side frames 310 facing each other in the left-right direction (Y-axis direction) of the pack housing 300.

In another example, as described above, the reinforcing frame 340 may be provided in the pack housing 300. In this case, one of the pair of open portions O of the cell case 200 may be provided at a position corresponding to the communication hole H of the side frame 310. The other of the pair of open portions O of the cell case 200 may be provided at a position corresponding to the communication hole H of the reinforcing frame 340. Also, when the reinforcing frame 340 is provided in the pack housing 300, the cell cases 200 in which the cell assembly 100 is accommodated may be located at both sides of the reinforcing frame 340.

In this case, as shown in FIGS. 3 and 10, a partition wall W extending in the front-back direction of the pack housing 300 may be provided in the reinforcing frame 340. The partition wall W may prevent venting gas and/or flame discharged from the open portion O of the cell case 200 located at one side of the reinforcing frame 340 from being introduced into the open portion O of the cell case 200 located at the other side of the reinforcing frame 340.

According to this embodiment, a thermal event may be more rapidly removed from the cell assembly 100 through the open portions O formed on both sides of the cell case 200.

Referring to FIGS. 3 and 10, the cell assembly 100 may be accommodated in the cell case 200 to be spaced apart from the open portion O.

That is, a length of the cell assembly 100 in the left-right direction (Y-axis direction) may be less than a length of the cell case 200 in the left-right direction.

Accordingly, venting gas and/or flame discharged from the cell assembly 100 may hit an inner end of the cell case 200 adjacent to the open portion O and may be discharged to the venting path C.

According to this embodiment, the flow of venting gas and/or flame discharged from the cell assembly 100 may be reliably guided in a certain direction, and simultaneous ignition between the plurality of cell assemblies 100 may be more reliably suppressed.

Referring to FIGS. 3 and 10, a plurality of cell assemblies 100 may be provided. Also, a plurality of cell cases 200 may be provided to correspond to the plurality of cell assemblies 100.

Also, the battery pack 10 may further include a compression pad P located between the cell cases 200. For example, the compression pad P may include an elastic material such as a sponge. In addition, the compression pad P may include a heat insulating material.

The compression pad P may be in close contact with the cell cases 200 facing each other in a stacking direction (X-axis direction) of the plurality of cell cases 200. Accordingly, the compression pad P may be configured to suppress swelling that may occur in the cell assembly 100. A size of a surface of the compression pad P facing the cell case 200 may correspond to a size of a side surface of the cell case 200 in the stacking direction (X-axis direction) of the cell cases 200.

Accordingly, because the spread of a flame due to thermal runaway of the cell assembly 100 may be delayed and swelling that may occur in the cell assembly 100 may be suppressed, the structural stability of the battery pack 10 may be further ensured.

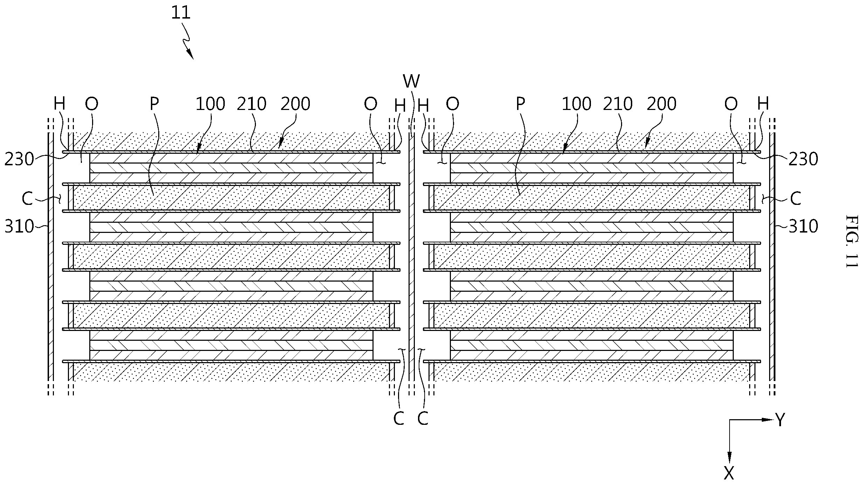

FIG. 11 is a view illustrating a battery pack 11 according to a second embodiment of the present disclosure.

Because the battery pack 11 according to the present embodiment is similar to the battery pack 10 of the previous embodiment, a repeated description of substantially the same or similar elements as those in the previous embodiment will be omitted and a difference from the previous embodiment will be mainly described.

Referring to FIG. 11, in the battery pack 11, the cell case 200 may further include an insertion portion 230.

The insertion portion 230 may be formed in the open portion O, and may be configured to be inserted into the venting path C of the pack housing 300 through the communication hole H.

In detail, the insertion portion 230 may extend from the open portion O. In particular, the insertion portion 230 may be formed by extending a left end and/or a right end of the case body 210.

The insertion portion 230 may be in close contact with the communication hole H in the front-back direction (X-axis direction) of the pack housing 300. Accordingly, venting gas and/or flame discharged from one cell assembly 100 may be introduced only into the venting path C of the pack housing 300 and may be more reliably prevented from traveling toward other cell assemblies 100 accommodated in the adjacent cell case 200.

According to the battery pack 11 according to the present embodiment, the cell assembly 100 may be more stably accommodated in the pack housing 300. Also, the flow of venting gas and/or flame discharged from the cell assembly 100 may be more stably guided in a specific direction.

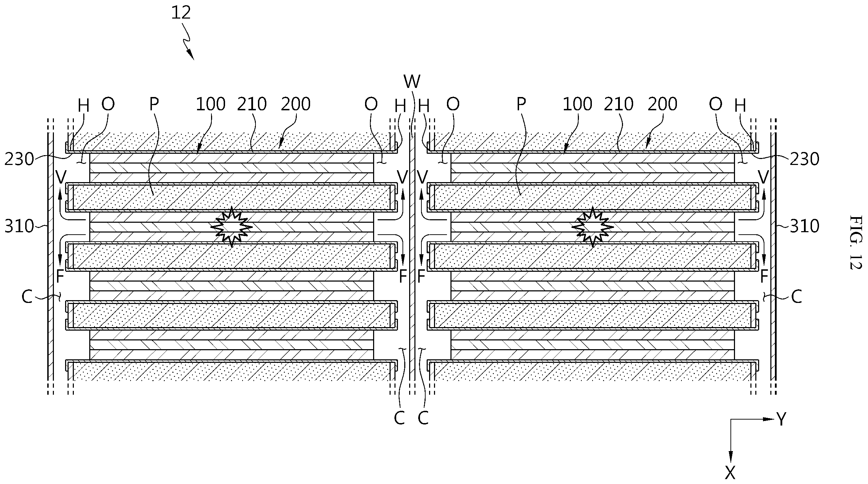

FIG. 12 is a view illustrating a battery pack 12 according to a third embodiment of the present disclosure. In this case, in FIG. 12, venting gas and flame are respectively denoted by 'V' and 'F'.

Because the battery pack 12 according to the present embodiment is similar to the battery pack 10 of the previous embodiment, a repeated description of substantially the same or similar elements as those in the previous embodiment will be omitted and a difference from the previous embodiment will be mainly described.

Referring to FIG. 12, in the battery pack 12, the insertion portion 230 may be bent from the open portion O toward the inside of the venting path C.

In detail, the insertion portion 230 may extend from the open portion O. The insertion portion 230 may be bent toward the inside of the venting path C while being inserted into the venting path C through the communication hole H.

In this case, to facilitate insertion of the bent insertion portion 230 into the venting path C, the insertion portion 230 may be formed of an elastic material or may be formed in an elastic shape. The insertion portion 230 that is elastic may be in contact with an inner surface of the pack housing 300 (an inner surface of the side frame 310 or the reinforcing frame 340) while being inserted into the venting path C. Accordingly, the cell case 200 may be more stably coupled to the pack housing 300.

Also, venting gas and/or flame discharged from the cell assembly 100 may be naturally introduced into the venting path C along the insertion portion 230 that is bent toward the inside of the venting path C.

According to the battery pack 12 according to the present embodiment, the cell assembly 100 may be more stably accommodated in the pack housing 300. Also, a discharge direction of venting gas and/or flame may be more stably guided along the insertion portion 230.

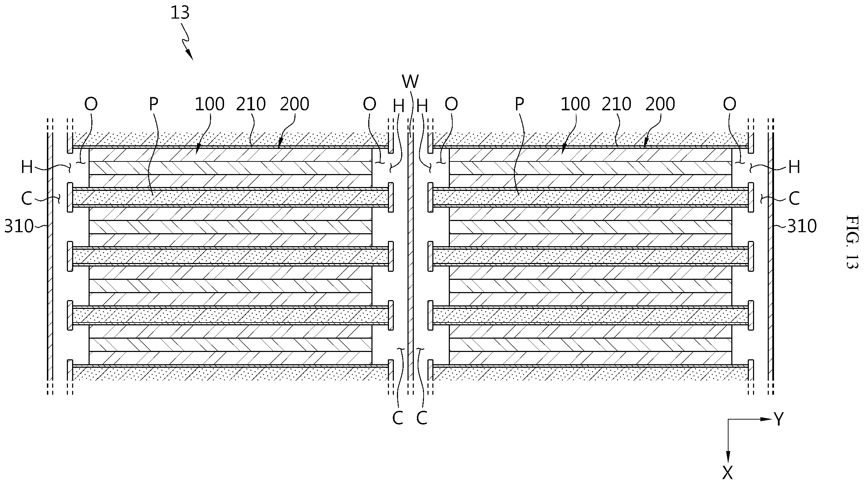

FIG. 13 is a view illustrating a battery pack 13 according to a fourth embodiment of the present disclosure.

Because the battery pack 13 according to the present embodiment is similar to the battery pack 10 of the previous embodiment, a repeated description of substantially the same or similar elements as those in the previous embodiment will be omitted and a difference from the previous embodiment will be mainly described.

Referring to FIG. 13, in the battery pack 13, the open portion O of the cell case 200 may have an area greater than that of the communication hole H of the pack housing 300.

In detail, the open portion O of the cell case 200 may be larger than the communication hole H of the pack housing 300 facing the open portion O of the cell case 200. Accordingly, the flow of venting gas and/or flame discharged from one cell assembly 100 toward other cell assemblies 100 accommodated in the adjacent cell case 200 may be further minimized.

According to the battery pack 13 according to the present embodiment, simultaneous ignition between a plurality of cell assemblies 100 may be more reliably suppressed.

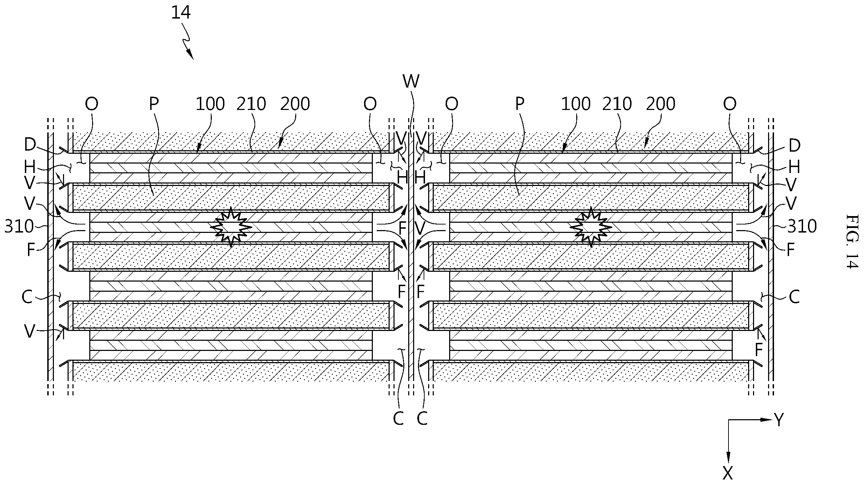

FIG. 14 is a view illustrating a battery pack 14 according to a fifth embodiment of the present disclosure. In this case, in FIG. 14, venting gas and flame are respectively denoted by 'V' and 'F'.

Because the battery pack 14 according to the present embodiment is similar to the battery pack 10 of the previous embodiment, a repeated description of substantially the same or similar elements as those in the previous embodiment will be omitted and a difference from the previous embodiment will be mainly described.

Referring to FIG. 14, in the battery pack 14, the pack housing 300 may further include a guide portion D.

The guide portion D may be bent from the communication hole H toward the inside of the venting path C. In detail, the guide portion D may extend from the communication hole H toward the venting path C and be bent toward the inside of the venting path C.

The guide portion D may more reliably guide a discharge direction of venting gas and/or flame discharged from the cell assembly 100 in a certain direction. That is, venting gas and/or flame discharged from the cell assembly 100 may be naturally introduced into the venting path C along the guide portion D through the communication hole H.

Also, the venting gas and/or flame introduced into the venting path C may hit the guide portion D and thus be minimized from flowing back into the cell case 200. In this case, a degree to which the guide portion D is bent from the communication hole H toward the inside of the venting path C may be set to an angle enough to suppress the reverse flow of venting gas and/or flame into the cell case 200.

According to the battery pack 14 according to the present embodiment, the flow of venting gas and/or flame may be more stably guided, and ignition in other cell assemblies 100 due to the reverse flow of venting gas and/or flame discharged from one cell assembly 100 back into the other cell assemblies 100 may be prevented or minimized.

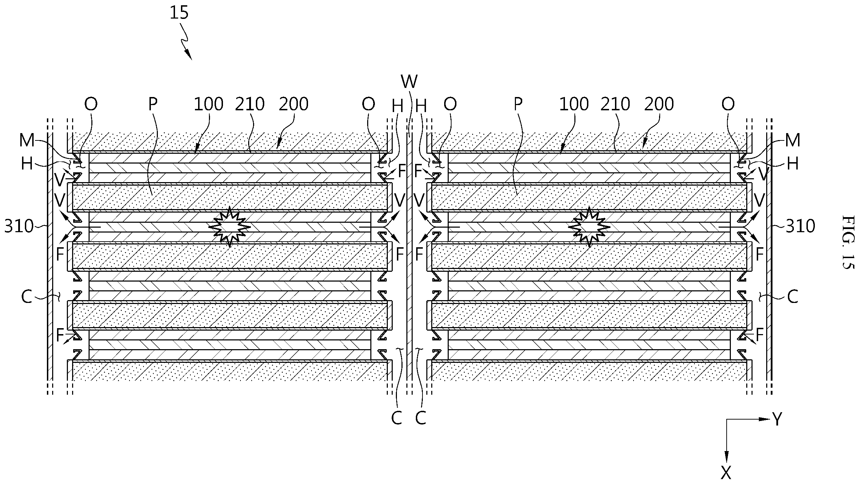

FIG. 15 is a view illustrating a battery pack 15 according to a sixth embodiment of the present disclosure. In this case, in FIG. 15, venting gas and flame are respectively denoted by 'V' and 'F'.

Because the battery pack 15 according to the present embodiment is similar to the battery pack 10 of the previous embodiment, a repeated description of substantially the same or similar elements as those in the previous embodiment will be omitted and a difference from the previous embodiment will be mainly described.

Referring to FIG. 15, in the battery pack 15, the cell case 200 may further include a flow preventing portion M.

The flow preventing portion M may be bent from the open portion O of the cell case 200 toward the cell assembly 100. In detail, the flow preventing portion M may be bent toward the inside of the cell case 200 to face the cell assembly 100.

Also, an end of the flow preventing portion M may be bent toward the venting path C. In detail, the flow preventing portion M may be bent from the open portion O of the cell case 200 toward the cell assembly 100 and then an end of the flow preventing portion M may be bent toward the venting path C. For example, a plurality of ends of the flow preventing portion M may be bent toward the venting path C.

In this case, venting gas and/or flame introduced into the venting path C through the open portion O may be minimized from being introduced into the cell case 200 while hitting an outer surface of the flow preventing portion M.

According to the battery pack 15 according to the present embodiment, ignition caused by the reverse flow of venting gas and/or flame discharged from one cell assembly 100 back into the cell assembly 100 may be prevented or minimized.

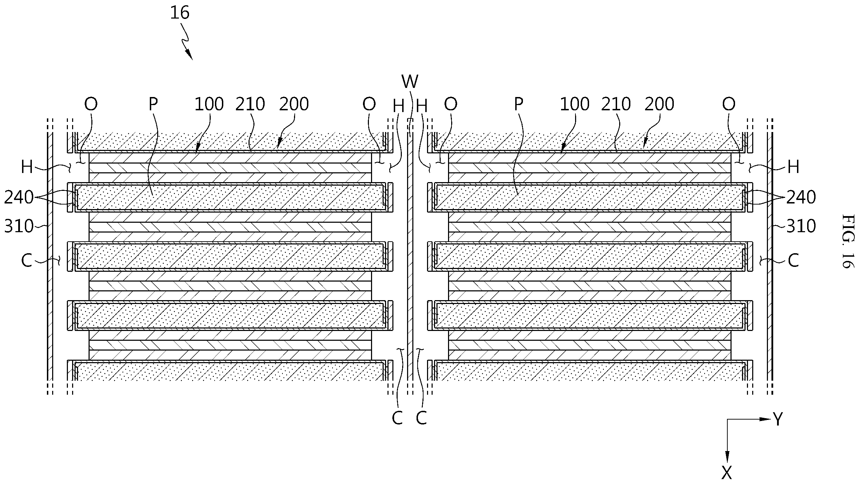

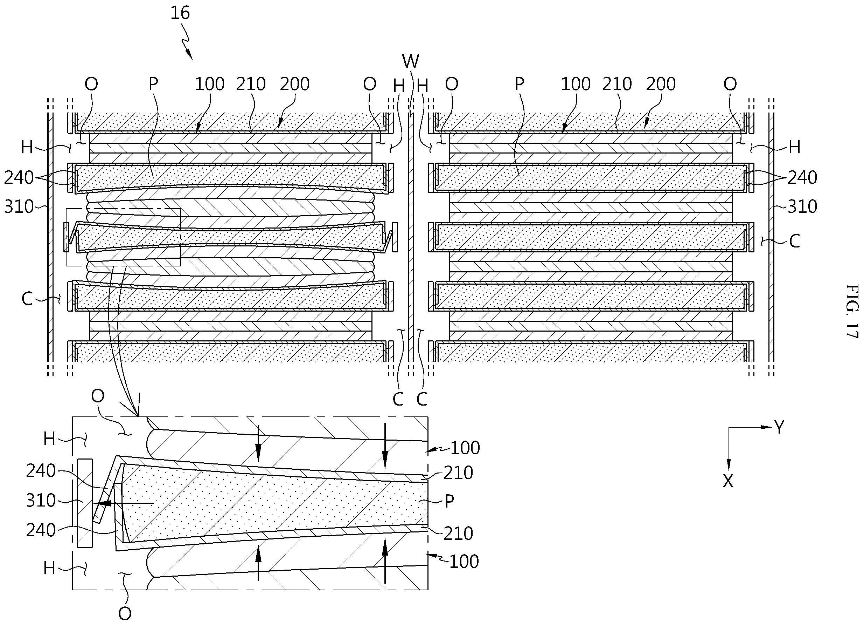

FIGS. 16 and 17 are views illustrating a battery pack 16 according to a seventh embodiment of the present disclosure. In this case, FIG. 16 is a view illustrating a state of the battery pack 16 before swelling of the cell assembly 100. FIG. 17 is a view illustrating a state of the battery pack 16 after swelling of the cell assembly 100.

Because the battery pack 16 according to the present embodiment is similar to the battery pack 10 of the previous embodiment, a repeated description of substantially the same or similar elements as those in the previous embodiment will be omitted and a difference from the previous embodiment will be mainly described.

Referring to FIGS. 16 and 17, in the battery pack 16, the cell case 200 may further include an extension portion 240.

In detail, the extension portion 240 may extend from the open portion O in the stacking direction (X-axis direction) of the plurality of cell cases 200. Also, the extension portion 240 may be located between the pack housing 300 and the compression pad P in the left-right direction (Y-axis direction) of the pack housing 300.

In particular, the extension portions 240 of the cell cases 200 adjacent to each other with the compression pad P therebetween may overlap each other between the pack housing 300 and the compression pad P in the left-right direction (Y-axis direction) of the pack housing 300.

In an embodiment of the present disclosure, when swelling occurs in the cell assembly 100, the cell assembly 100 may expand. In this case, a side surface of the cell case 200 in which the cell assembly 100 is accommodated may expand in the stacking direction (X-axis direction) of the plurality of cell cases 200. Accordingly, a gap between the pack housing 300 and the extension portion 240 may increase in the left-right direction (Y-axis direction) of the pack housing 300.

In the battery pack 16 according to the present embodiment, as described above, the extension portion 240 of the cell case 200 may be located between the pack housing 300 and the compression pad P. Accordingly, even when swelling occurs in the cell assembly 100 as shown in FIG. 17, the extension portions 240 of the cell cases 200 adjacent to each other with the compression pad P may be bent while overlapping each other to seal a gap in the stacking direction of the plurality of cell cases 200.

Also, as shown in FIG. 17, the compression pad P may be compressed as side surfaces of the cell cases 200 expand due to the expansion of the cell assemblies 100. In this case, the compression pad P may be compressed in the stacking direction of the plurality of cell cases 200, and may extend in the left-right direction (Y-axis direction) of the pack housing 300. Accordingly, the compression pad P may compress the extension portions 240 of the cell cases 200 adjacent to each other with the compression pad P therebetween toward the pack housing 300. In this case, a gap in the stacking direction of the plurality of cell cases 200, in particular, a gap between the cell case 200 and the pack housing 300 may be more reliably sealed.

According to the battery pack 16 according to the present embodiment, when swelling occurs and thermal runaway occurs at the same time in the cell assembly 100, the flow of venting gas and/or flame discharged from one cell assembly 100 toward other cell assemblies accommodated in the adjacent cell case 200 may be minimized.

Although the communication hole H of the pack housing 300 is open in various embodiments of FIGS. 10 to 17, the communication hole H may not be open but may be closed in a normal state. For example, a separate door member (not shown) may be provided in the communication hole H of the pack housing 300 and the communication hole H may be closed in a normal state, but when venting gas is generated from a specific cell assembly 100, the communication hole H corresponding to the cell assembly 100 may be opened by pressure or heat. For example, the communication hole H may be blocked by a member such as a mica sheet. Furthermore, the mica sheet may be formed by previously cutting or notching a specific portion and may be configured to be opened by pressure.

According to this embodiment of the present disclosure, venting gas or flame flowing through the venting path C may be more effectively prevented from being introduced into other cell assemblies 100 through the communication hole H.

Any of the battery packs 10, 11, 12, 13, 14, 15, 16 according to the present disclosure may be applied to a vehicle such as an electric vehicle. That is, a vehicle according to the present disclosure may include at least one of the battery packs 10, 11, 12, 13, 14, 15, 16 according to the present disclosure.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

It will be understood by one of ordinary skill in the art that when terms indicating directions such as upper, lower, left, right, front, and rear are used, these terms are only for convenience of explanation and may vary according to a position of a target object, a position of an observer, etc.

## Claims

1. A battery pack comprising:
a cell assembly;
a cell case in which the cell assembly is accommodated, the cell case comprising an open portion formed in at least one side of the cell case; and
a pack housing to which the cell case is coupled, the pack housing comprising a venting path facing the open portion.

2. The battery pack according to claim 1, wherein the cell case comprises a coupling portion configured to be coupled to the pack housing,
wherein the coupling portion is configured to be in surface contact with the pack housing.

3. The battery pack according to claim 2, wherein the coupling portion is configured to be coupled to a floor frame or an upper cover of the pack housing.

4. The battery pack according to claim 1, wherein the pack housing comprises a plurality of frames that are coupled to each other,
wherein at least one of the plurality of frames comprise the venting path facing the open portion.

5. The battery pack according to claim 1, wherein the pack housing comprises a communication hole communicating with the venting path,
wherein the communication hole is formed at a position corresponding to the open portion of the cell case.

6. The battery pack according to claim 5, wherein the open portion is configured to be in close contact with a portion of the pack housing where the communication hole is formed.

7. The battery pack according to claim 6, wherein the cell case further comprises an insertion portion formed in the open portion and configured to be inserted into the venting path through the communication hole.

8. The battery pack according to claim 7, wherein the insertion portion is bent from the open portion toward inside of the venting path.

9. The battery pack according to claim 6, wherein the open portion has an area greater than an area of the communication hole.

10. The battery pack according to claim 5, wherein a pair of open portions are formed on both sides of the cell case,
wherein the communication holes are formed at positions corresponding to the pair of open portions.

11. The battery pack according to claim 5, wherein the pack housing further comprises a guide portion bent from the communication hole toward inside of the venting path.

12. The battery pack according to claim 1, wherein the cell assembly is accommodated in the cell case to be spaced apart from the open portion.

13. The battery pack according to claim 1, wherein the cell case further comprises a flow preventing portion bent from the open portion toward the cell assembly,
wherein an end of the flow preventing portion is bent toward the venting path.

14. The battery pack according to claim 1, wherein
the cell assembly is provided in a plurality of cell assemblies, and
the cell case is provided in a plurality of cell cases that are provided to correspond to the plurality of cell assemblies,
wherein the battery pack further comprises a compression pad located between the plurality of cell cases,
wherein each cell case further comprises an extension portion extending from the open portion in a stacking direction of the plurality of cell cases and located between the pack housing and the compression pad.

15. A vehicle comprising at least one battery pack according to any one of claims 1 to 14.
